# EUROPEAN PATENT APPLICATION

(11) **EP 2 279 938 A1**
(43) Date of publication of application: **02.02.2011**
(21) Application number: 10007866.6
(22) Date of filing: 28.07.2010
(51) Int. Cl.: B62M 7/12, B60K 7/00

(54) **Motor driving device and electric vehicle equipped with the same**

(30) Priority: 29.07.2009 JP 2009176877
(71) Applicant: Sanyo Electric Co., Ltd., Osaka 570-8677 (JP)
(72) Inventor: Sagara, Hiroaki, Osaka 570-8677 (JP); Taguchi, Kenji, Osaka 570-8677 (JP); Nagao, Takeshi, Osaka 570-8677 (JP); Uchino, Takashi, Osaka 570-8677 (JP)
(74) Representative: Glawe, Delfs, Moll

(57) **Abstract**

A motor driving device includes a motor and a brake mechanism which brakes rotation of the motor. The motor and the brake mechanism are disposed in parallel to each other. A connection portion for connecting the motor and the brake mechanism is disposed between the motor and the brake mechanism. A size of the connection portion in the radial direction with respect to the axis of the motor is smaller than outer diameter of the motor as well as outer diameter of the brake mechanism.

## Description

### BACKGROUND OF THE INVENTION

### Field of the Invention

The present invention relates to a motor driving device which connects an output shaft of a motor with a hub of a wheel so as to drive the wheel as a driving wheel. The present invention also relates to an electric vehicle equipped with the motor driving device.

### Description of Related Art

Conventionally, automobiles and motorcycles usually use an engine as a drive power source, which generates driving force by consuming gasoline or light oil as fuel. Recently, however, as a countermeasure for environmental protection, development of electric vehicle is widely noticed, which uses a motor as a drive power source that consumes electric power as energy for generating driving force.

As the driving device for the electric vehicle using the motor, a motor driving device has been developed which connects the output shaft of the motor with the hub of the wheel so that the wheel is driven as a driving wheel. There is disclosed a conventional motor driving device, which includes a stator fixed to a vehicle body, a rotor which rotates integrally with a wheel member of the wheel, and a brake mechanism which brakes the wheel, in which the stator and the rotor are disposed on the opposite side to the brake mechanism with respect to the wheel member.

Here, the motor driving device has a problem of heat generation in the motor or the brake mechanism. Concerning this, the conventional motor driving device has a structure in which a wheel member of the wheel is sandwiched between the motor and the brake mechanism so that heat generated in each of them hardly flow to the other. However, since it is the structure in which the wheel member, the motor and the brake mechanism are disposed closely, it may be difficult to obtain cooling effect due to air flow when the vehicle runs.

Therefore, the motor and the brake mechanism may not be able to radiate heat efficiently, and so it is concerned that temperature of them may further rise because of heat remaining in the wheel member. As a result, there is a problem that the motor may be affected badly so that life of the motor may be shortened, or it is necessary to decrease drive time for avoiding the deterioration of life. In addition, if the brake mechanism is used continuously at high temperature, a brake shoe, a brake pad or the like may be worn out early so that braking performance is decreased.

### SUMMARY OF THE INVENTION

The present invention is created in view of the problems described above, and it is an object thereof to provide a motor driving device having high reliability in which heat generated in the drive can be radiated efficiently so that long life, long drive, and prevention of deterioration of brake performance can be realized. In addition, it is another object to provide an electric vehicle having high reliability equipped with such the motor driving device.

In order to solve the above-mentioned problem, a motor driving device of the present invention includes a motor and a brake mechanism which brakes rotation of the motor, in which the motor and the brake mechanism are disposed in parallel to each other, and a connection portion for connecting the motor and the brake mechanism is disposed between the motor and the brake mechanism. A size of the connection portion in the radial direction with respect to the axis of the motor is smaller than outer diameter of the motor as well as outer diameter of the brake mechanism. The brake mechanism may brake rotation of the motor directly or may brake a rotating member, e.g., a wheel driven by the motor to rotate.

In addition, the motor driving device includes a motor and a brake mechanism which brakes rotation of the motor, in which the motor and the brake mechanism are connected mechanically to each other and are disposed in parallel to each other with a space between them.

In addition, at the connection portion of the motor driving device having the above-mentioned structure, a covering member of the brake mechanism and a covering member of the motor are constituted as separate members.

Alternatively, at the connection portion of the motor driving device having the above-mentioned structure, a covering member of the brake mechanism and a covering member of the motor are constituted integrally.

In addition, according to the present invention, the motor driving device is mounted on an electric vehicle.

In addition, the electric vehicle includes a motor as a driving source for rotating a wheel, a brake mechanism which brakes the wheel and is disposed in parallel with the motor, and a connection portion disposed between the motor and the brake mechanism for connecting the motor and the brake mechanism, in which a size of the connection portion in the radial direction with respect to the axis of the motor is smaller than outer diameter of the motor as well as outer diameter of the brake mechanism.

### BRIEF DESCRIPTION OF THE DRAWINGS

FIG 1 is a right side view illustrating an example of an electric vehicle equipped with a motor driving device according to a first embodiment of the present invention.
FIG 2 is a right side view of a rear wheel part of the electric vehicle illustrated in FIG 1.
FIG 3 is a vertical sectional front view of the rear wheel part of the electric vehicle illustrated in FIG 1.
FIG 4 is a top view of a motor driving device illustrated in FIG 3.
FIG 5 is a perspective view of the motor driving device illustrated in FIG 4.
FIG 6 is a perspective view of the motor driving device illustrated in FIG 5 in a partially exploded state.
FIG 7 is a top view of a motor driving device according to a second embodiment of the present invention.

### DETAILED DESCRIPTION OF THE PREFERRED EMBODIMENTS

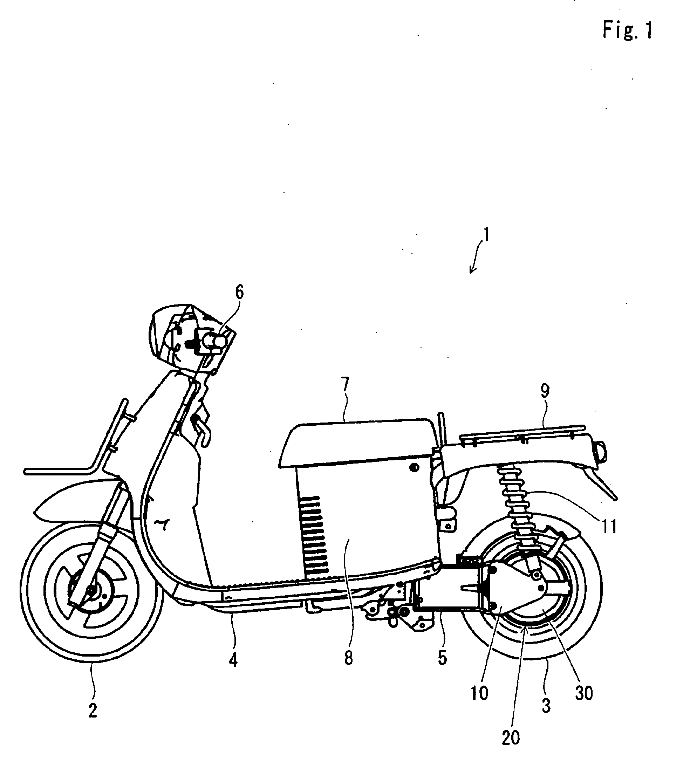

Hereinafter, embodiments of the present invention will be described with reference to FIGS. 1 to 7.

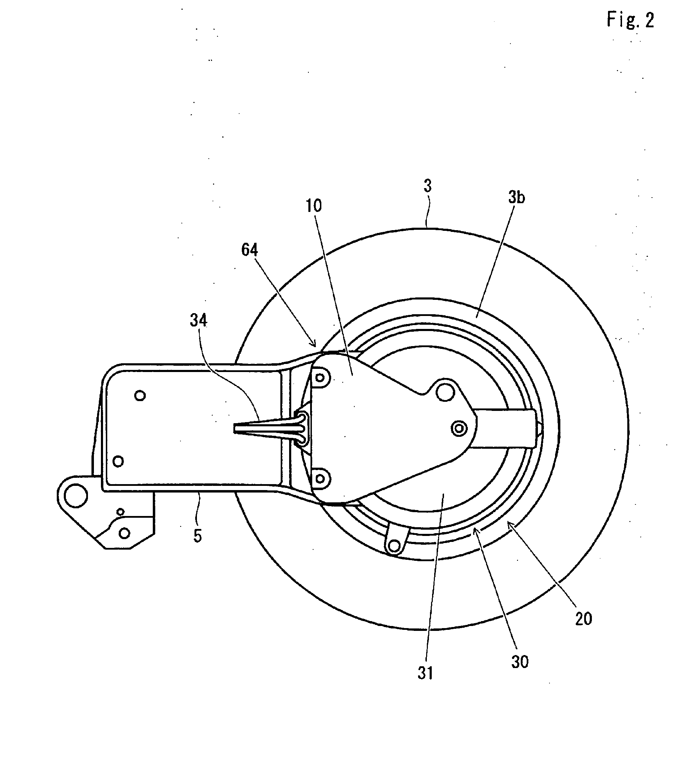

First, a structure of an electric vehicle equipped with a motor driving device according to a first embodiment of the present invention will be described with reference to FIGS. 1 and 2. FIG 1 is a right side view illustrating an example of the electric vehicle equipped with a motor driving device, and FIG 2 is a right side view of a rear wheel part of the electric vehicle.

An electric vehicle 1 is a motorcycle having a front wheel 2 and a rear wheel 3 as illustrated in FIG 1. The electric vehicle 1 has a primary framework including a main frame 4 and a swing arm 5.

The main frame 4 is bent upward at the front end portion, which supports a front wheel 2 and a handle bar 6 in a steerable manner. On the rear end side of the main frame 4 at substantially middle portion in the front and rear direction of the electric vehicle 1, there is provided a seat 7 on which a driver sits and a battery storage 8. The battery storage 8 is disposed below the seat 7 and can house battery (not shown) inside. The seat 7 also has a function as a lid of the battery storage 8 and is attached to the battery storage 8 in an openable and closable manner. At the rear of the seat 7 of the main frame 4 and above the rear wheel 3, there is provided a carrier 9.

The swing arm 5 extends backward from the rear portion of the main frame 4 under the seat 7 and the battery storage 8. The rear wheel 3 is supported by the rear end of the swing arm 5 as illustrated in FIGS. 1 and 2. Note that the swing arm 5 is provided to only the left side of the rear wheel 3, so that the rear wheel 3 is supported in a cantilever state. In addition, the rear wheel 3 is a driving wheel, and a motor driving device 20 is disposed between the rear wheel 3 and the swing arm 5. The rear end of the swing arm 5 is connected to the front end portion of the motor driving device 20, and the swing arm 5 is a supporting member which supports the rear wheel 3 via the motor driving device 20. On the left side of the motor driving device 20, there is provided a suspension casing 10. A suspension unit 11 of the rear wheel 3 extends from the suspension casing 10 upward to the carrier 9.

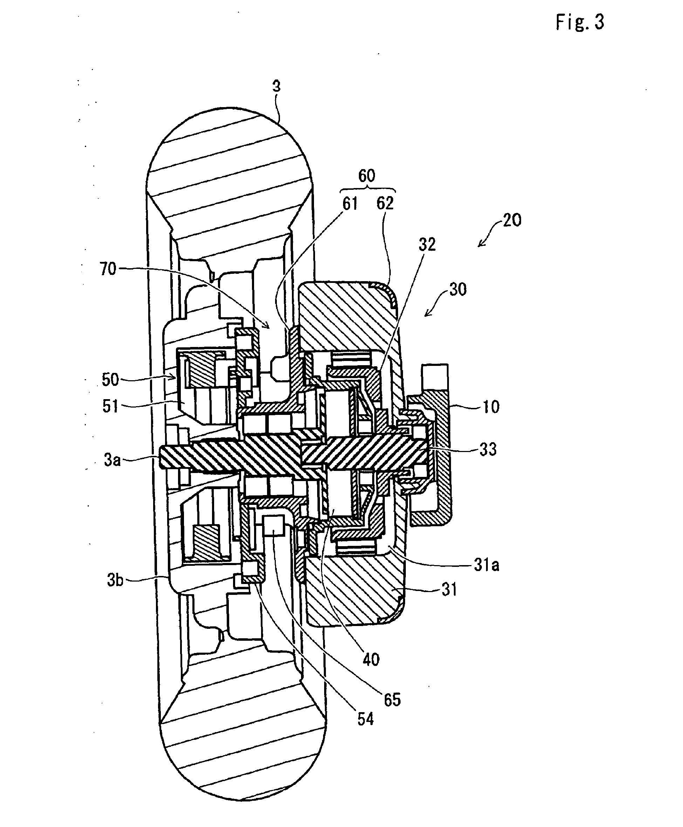

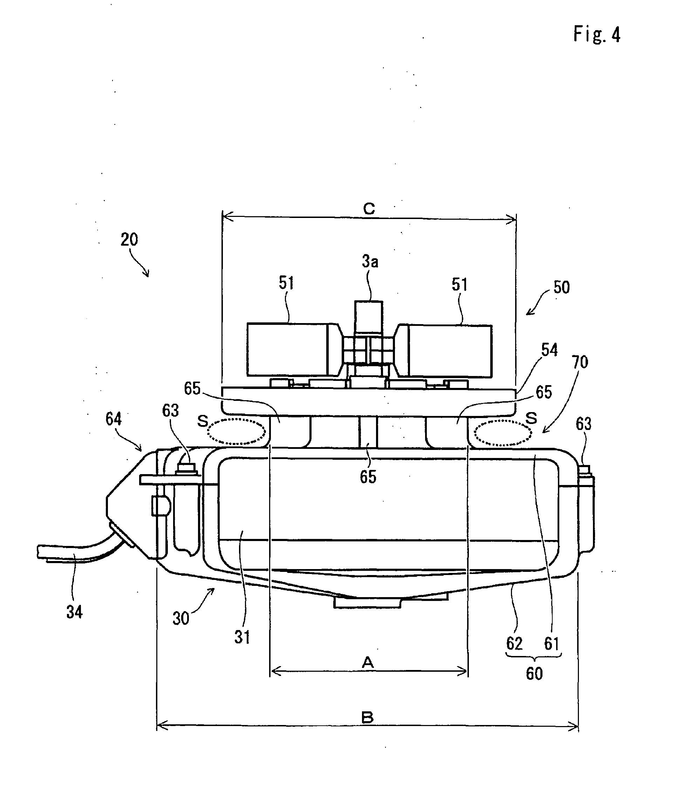

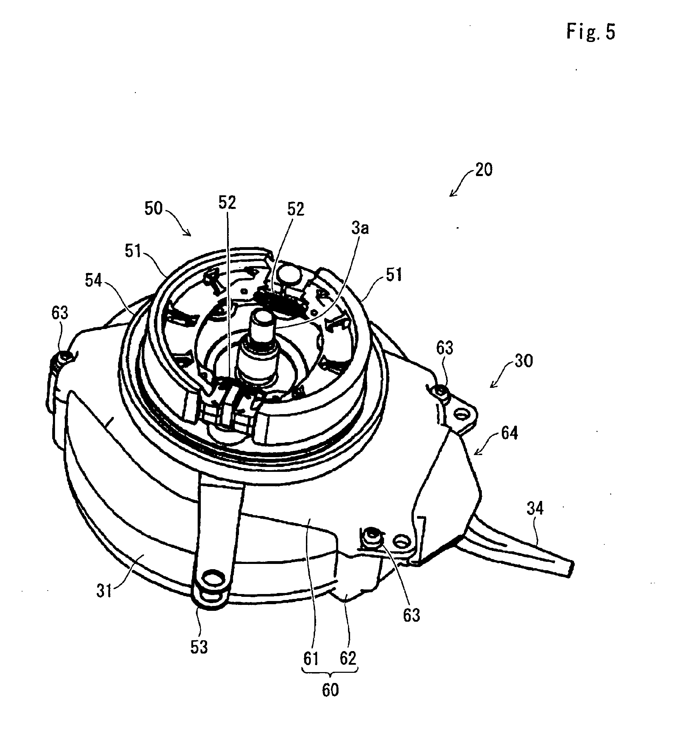

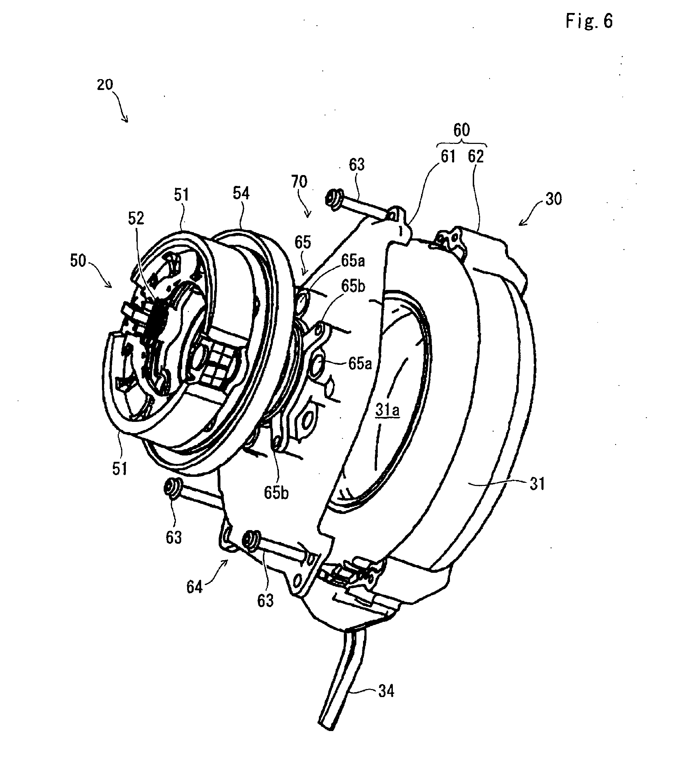

Next, a detailed structure of the motor driving device 20 at a portion of the rear wheel 3 will be described with reference to FIGS. 1 and 2 as well as FIGS. 3 to 6. FIG 3 is a vertical sectional front view of the rear wheel part of the electric vehicle, FIG 4 is a top view of the motor driving device, FIG 5 is a perspective view of the motor driving device, and FIG 6 is a perspective view of the motor driving device in a partially exploded state. Note that a reduction gear and a rotor inside a mold motor are omitted in FIG 6.

As illustrated in FIG 3, at the part of the rear wheel 3 of the electric vehicle 1, there are provided the suspension casing 10, the motor driving device 20, and the rear wheel 3 in this order from the left side of the rear wheel 3, i.e., from the right side in FIG 3. Further, the motor driving device 20 is provided with a mold motor 30, a reduction gear 40, and a brake mechanism 50 that are arranged in parallel with respect to the axis direction of the rear wheel 3.

As illustrated in FIGS. 2 and 3, the mold motor 30 is a motor for an electric vehicle, in which a ring-shaped stator core (not shown) is coated with insulating mold resin 31. The axis of the stator core of the mold motor 30 is agreed with a wheel shaft 3a of the rear wheel 3, and the mold motor 30 is disposed close to the rear wheel 3.

Inside the mold resin 31, a recess 31a is formed as illustrated in FIG 3, which has a cylindrical shape that opens on the rear wheel 3 side. In the recess 31 a, a rotor 32 of the motor is disposed. The rotor 32 is disposed so that its axis is agreed with an axis of the stator core and is fixed to a motor shaft 33 that is disposed in a rotatable manner. Therefore, when the mold motor 30 is driven, the rotor 32 rotates, and its power is transmitted to the motor shaft 33.

Further, the mold motor 30 has a motor case 60 that retains the mold resin 31 by catching the same inside. The motor case 60 includes an outer case 62 and an inner case 61 made of metal such as aluminum alloy. As illustrated in FIG 3, the inner case 61 is disposed on the rear wheel 3 side, and the outer case 62 is disposed on the suspension casing 10 side that is opposite to the rear wheel 3 side. The inner case 61 and the outer case 62 are coupled to each other by three bolts 63 catching the mold resin 31 between them (see FIGS. 5 and 6). Two bolts 63 are provided on the front end portion at the upper and the lower positions, and one bolt 63 is provided on the rear end portion.

In addition, the motor case 60 is provided with a connection portion 64 at the front end portion. The connection portion 64 is connected to the rear end of the swing arm 5 illustrated in FIG. 2, so that the entire mold motor 30 is supported. The motor case 60 holds the mold resin 31 and receives a load from the wheel shaft 3a, and is further connected to and supported by the swing arm 5, as an important member to which a large force is applied.

At the connection portion 64, there are connected power lines 34 for supplying electric power to the mold motor 30. The power lines 34 extend from a part of the connection portion 64 to outside in the radial direction of the mold motor 30, i.e., to the front along the swing arm 5. Note that signal lines (not shown) for sending and receiving control signals are also connected to the mold motor 30. The signal lines also extend from a part of the connection portion 64 to the front along the swing arm 5 similarly to the power line 34.

The reduction gear 40 is disposed at the part between the motor shaft 33 and the wheel shaft 3a. The reduction gear 40 is constituted of a planetary gear mechanism or the like, for example.

The brake mechanism 50 is a so-called drum brake disposed at a vicinity of a wheel member 3b of the rear wheel 3 and includes a brake shoe 51, a spring 52, a brake arm 53, and a brake cover 54 as illustrated in FIGS. 3 to 6. The brake shoe 51 is disposed inside the wheel member 3b. When the brake mechanism 50 is inactive, the brake shoe 51 is separated from the wheel member 3b by action of the spring 52 inward in the radial direction. When the brake arm 53 rotates, the brake shoe 51 is extended outward in the radial direction against the elastic force of the spring 52 with respect to the wheel shaft 3a. Then, the brake shoe 51 generates frictional resistance between the brake shoe 51 and a drum (not shown) rotating integrally with the wheel member 3a, so that the rotation of wheel member 3a, i.e., the rear wheel 3 is braked.

Note that the brake cover 54 as a lid is attached to a part of the wheel member 3b at which the brake shoe 51 is disposed, so that the part is covered to prevent dust or the like from entering inside (see FIG 3). The brake cover 54 has the dust preventing function for the inside of the brake mechanism 50, as well as a function of retaining brake members such as the brake shoe 51, the spring 52, and the brake arm 53.

On the other hand, between the mold motor 30 and the brake mechanism 50, as illustrated in FIGS. 3, 4 and 6, there is provided a connection portion 70 for connecting the mold motor 30 with the brake mechanism 50. The connection portion 70 is provided with a boss 65 formed on the inner case 61 of the mold motor 30 so as to protrude from the outer surface of the inner case 61 toward the brake mechanism 50. The wheel shaft 3a penetrates the middle portion of the boss 65, and around the same, there are disposed positioning pin insertion holes 65a and fixing screw insertion holes 65b for the brake cover 54 (see FIG 6). Further, as illustrated in FIG 4 using symbols A, B and C, a size A of the boss 65, i.e., the connection portion 70 in the radial direction with respect to the axis is smaller than an outer diameter B of the mold motor 30 as well as an outer diameter C of the brake mechanism 50. Note that the size A of the connection portion 70 in the radial direction with respect to the axis indicates a size in the radial direction of the boss 65 including the positioning pin insertion hole 65a and the fixing screw insertion hole 65b illustrated in FIG 6.

According to this structure, a space S (space indicated by a dot line circle in FIG. 4) can be formed between a main part of the mold motor 30 and a main part of the brake mechanism 50 as illustrated in FIG 4. In other words, by arranging the inner case 61 of the mold motor 30 and the brake cover 54 of the brake mechanism 50 coaxially, a plate-like part of the inner case 61 extending in the radial direction and the brake cover 54 are arranged in parallel with an interval between them, so that the space S can be formed between them. Therefore, air flow generated when the electric vehicle 1 runs can be supplied to this space S so as to cool the mold motor 30 and the brake mechanism 50. In addition, since this space S is provided, a surface area of the mold motor 30 and the brake mechanism 50 exposed to the outer air increases so that the heat radiation effect can be further enhanced. Further, since each of the mold motor 30 and the brake mechanism 50 becomes a heat generating source, heat transmission each of them can be suppressed by disposing the connection portion 70 having a small outer diameter.

In addition, in the connection portion 70, the brake cover 54 as a covering member of the brake mechanism 50 and the inner case 61 as a covering member of the mold motor 30 are constituted as separate members. Therefore, the connection portion 70 that improves the heat radiation effect can be formed easily. In addition, since a size of the brake mechanism 50 can be changed freely, versatility of the motor driving device 20 can be enhanced. Note that each of the brake cover 54 and the inner case 61 is not merely a covering member. As described above, the brake cover 54 has a function of retaining the brake member, and the inner case 61 has a function for supporting the mold motor 30 and the rear wheel 3.

According to the above-mentioned structure, heat generated in drive can be radiated efficiently, so that a long life, long drive time, and prevention of deterioration of brake performance can be realized. Thus, the motor driving device 20 having high reliability can be provided.

In addition, if this motor driving device 20 is mounted on an electric vehicle 1, a life of the vehicle and a drive distance will be increased, so that the electric vehicle 1 having high reliability can be provided.

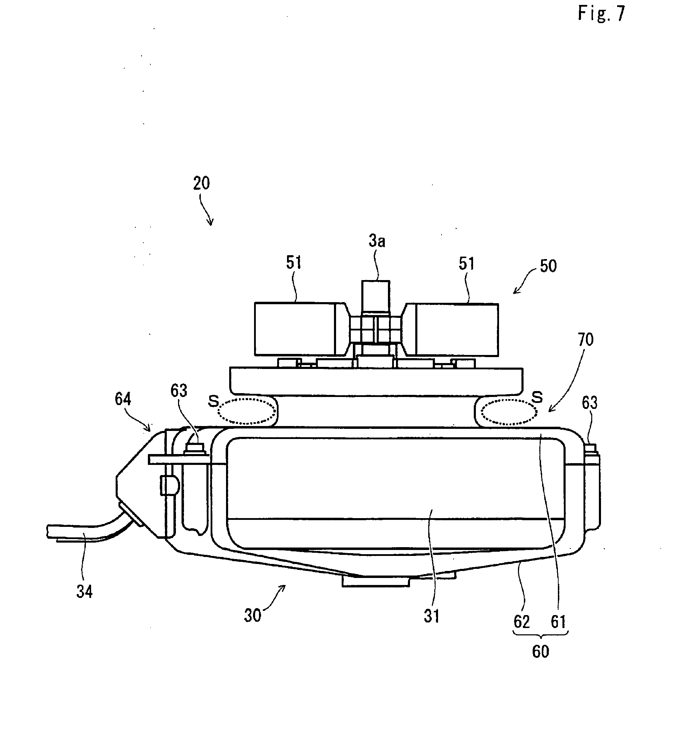

Next, a detailed structure of a motor driving device according to a second embodiment of the present invention will be described with reference to FIG. 7. FIG. 7 is a top view of the motor driving device. Note that a fundamental structure of this embodiment is the same as the first embodiment described above with reference to FIGS. 1 to 6. Therefore, illustration and description for the same structure as the first embodiment will be omitted.

In the motor driving device 20 according to the second embodiment, as illustrated in FIG 7, the brake mechanism 50 does not include the brake cover 54 as a single member that is used in the first embodiment. The inner case 61 of the motor case 60 covers the space in which the brake shoe 51 is disposed at a part of the end portion on the rear wheel 3 side, so that dust or the like cannot enter the inside, and further retains the brake member such as the brake shoe 51.

Specifically, in the connection portion 70, a covering member of the brake mechanism 50 corresponding to the brake cover 54 and the inner case 61 as the covering member of the mold motor 30 are constituted integrally. According to this structure, the heat radiation effect of the motor driving device 20 can be enhanced. In addition, it is not necessary to connect the covering member of the brake mechanism 50 to the covering member of the mold motor 30. Thus, connection members such as bolts are not necessary, so it is possible to improve workability of assembling the motor driving device 20 and to realize small size and light weight.

Although embodiments of the present invention are described above, the scope of the present invention is not limited to the embodiments, which can be modified variously within the scope of the present invention without deviating from the spirit thereof.

For instance, in the embodiments of the present invention, the motorcycle illustrated in FIG 1 is exemplified as the electric vehicle 1 equipped with the motor driving device. However, the electric vehicle on which the motor driving device is mounted is not limited to a motorcycle but may be a motor tricycle or a four wheel car.

In addition, the reduction gear 40 and the brake mechanism 50 are not limited to the mechanism described above in the embodiment. For instance, the brake mechanism 50 may be a disc brake.

## Claims

1. A motor driving device comprising a motor, a brake mechanism which brakes rotation of the motor and is disposed in parallel with the motor, and a connection portion disposed between the motor and the brake mechanism for connecting the motor and the brake mechanism, **characterized in that**
a size of the connection portion in the radial direction with respect to the axis of the motor is smaller than outer diameter of the motor as well as outer diameter of the brake mechanism.

2. A motor driving device comprising a motor and a brake mechanism which brakes rotation of the motor, **characterized in that**
the motor and the brake mechanism are connected mechanically to each other and are disposed in parallel to each other with a space between them.

3. A motor driving device according to claim 1, **characterized in that**
a covering member of the brake mechanism and a covering member of the motor are constituted as separate members at the connection portion.

4. A motor driving device according to claim 1, **characterized in that**
a covering member of the brake mechanism and a covering member of the motor are constituted integrally at the connection portion.

5. An electric vehicle comprising the motor driving device according to any one of claims 1 to 4.

6. An electric vehicle comprising a motor as a driving source for rotating a wheel, a brake mechanism which brakes the wheel and is disposed in parallel with the motor, and a connection portion disposed between the motor and the brake mechanism for connecting the motor and the brake mechanism, **characterized in that**
a size of the connection portion in the radial direction with respect to the axis of the motor is smaller than outer diameter of the motor as well as outer diameter of the brake mechanism.
